(19) Europäisches Patentamt
European Patent Office
Office européen des brevets

(11) **EP 3 293 148 B1**

(12) **FASCICULE DE BREVET EUROPEEN**

(45) Date de publication et mention
de la délivrance du brevet:
**30.01.2019 Bulletin 2019/05**

(51) Int Cl.:
***C01B 33/20*** *(2006.01)*   ***C01B 33/32*** *(2006.01)*
***H01M 4/50*** *(2010.01)*   ***H01M 4/52*** *(2010.01)*
***H01M 4/58*** *(2010.01)*

(21) Numéro de dépôt: **17190224.0**

(22) Date de dépôt: **08.09.2017**

(54) **PROCÉDÉ DE FABRICATION D'UN MATÉRIAU SILICATÉ DE STRUCTURE OLIVINE**

HERSTELLUNGSVERFAHREN EINES SILIKATMATERIALS MIT OLIVINSTRUKTUR

METHOD FOR MANUFACTURING A SILICATE MATERIAL WITH OLIVINE STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.09.2016 FR 1658467**

(43) Date de publication de la demande:
**14.03.2018 Bulletin 2018/11**

(73) Titulaire: **Commissariat à l'Energie Atomique et aux Energies
Alternatives
75015 Paris (FR)**

(72) Inventeurs:
• **LEFEVRE, Guillaume**
**38000 GRENOBLE (FR)**
• **DUCROS, Jean-Baptiste**
**38360 SASSENAGE (FR)**
• **MARTINET, Sébastien**
**38210 ST QUENTIN SUR ISERE (FR)**

(74) Mandataire: **Nony**
**11 rue Saint-Georges**
**75009 Paris (FR)**

(56) Documents cités:
**US-A- 6 085 015   US-A1- 2014 227 596**

• **SARCIBAR A ET AL: "New insights into electrochemical performance of Li2MnSiO4: effect on cationic substitutions", J. MATER CHEM,, vol. 3, 2 février 2015 (2015-02-02), pages 6004-6011, XP002770398,**
• **T. SSARKAR ET AL.: "Mechanismm of charge transfer in olivine-type LiFeSiO4 and LiFe0.5M0.5SiO4(M=Mg, Al) cathode materials: First-principles", J.PHYS.CHEM.C, vol. 119, 16 avril 2015 (2015-04-16), pages 9125-9133, XP002770439,**
• **Y. FANG ET AL.: "High-performance olivine NaFePO4 microsphere cathode synthesized by aqueous electrochemichal displacement method for sodiun ion batteries", ACS APPL. MATER. INTERFACES, vol. 7, no. 32, 24 juillet 2015 (2015-07-24), pages 17977-17984, XP002770440, DOI: 10.1021/acsami.5b04691**

EP 3 293 148 B1

**Description**

La présente invention concerne un produit silicaté et de structure cristallographique olivine, destiné notamment à une batterie, ainsi que des procédés de fabrication d'un tel produit.

Les matériaux polyanioniques cristallins sont des matériaux d'intérêt pour l'industrie des batteries, en particulier des batteries lithium-ion. Toutefois, à ce jour, à la connaissance des inventeurs, seul le phosphate de fer lithié $LiFePO_4$ est commercialisé. A la différence d'autres matériaux pour électrode positive de batterie tels que les oxydes lamellaires et les spinelles, les matériaux polyanioniques présentent une structure stabilisée par la covalence du groupement anionique. Ils favorisent ainsi un fonctionnement fiable d'une batterie qui les comporte, limitant les risques d'emballement de la batterie par dégagement d'oxygène dans l'électrolyte. De tels matériaux sont par exemple décrits dans US 6,085,015, US 6,514,640 B1 et EP 1 134 826 A1.

Les phosphate, borate, sulfate, silicate ainsi que leur déclinaison pyro- et fluoro-sont des polyanions de base pour constituer de tels matériaux polyanioniques. Notamment, les matériaux polyanioniques à base de silicate, dits silicatés, apparaissent comme les plus intéressants dès lors que la sécurité de fonctionnement et la fiabilité de la batterie doivent être assurées.

Il est par exemple connu un matériau silicaté de formule $Li_2MSiO_4$, avec M étant un métal de transition choisi parmi le fer (Fe), le manganèse (Mn), le cobalt (Co) et le nickel (Ni). Un tel matériau silicaté est décrit par exemple dans US 2012/0227252 A1. La structure cristallographique de ces matériaux silicatés consiste en un empilement de tétraèdres de $LiO_4$, $MO_4$ et $SiO_4$. Ces silicates présentent une forte capacité spécifique théorique comprise entre 325 mAh/g et 333 mAh/g, environ deux fois supérieure aux oxydes mixtes tels que $LiCoO_2$, $LiNi_{0.8}Co_{0.15}Al_{0.05}O_2$ (NCA), $LiNi_{1/3}Co_{1/3}Mn_{1/3}O_2$ (NMC), $LiMnO_4$ (LMO) et le phosphate de fer lithié $LiFePO_4$.

L'homme du métier connaît également des matériaux ayant une formule Li05Mn0,75M0,25SiO4 et où le métal M peut être le magnésium (voir SARCIBAR A ET AL: "New insights into electrochemical performance of Li2MnSiO4: effect on cationic substitutions", J. MATER CHEM" vol. 3, 2 février 2015 (2015-02-02), pages 6004-6011) ou LiFe0.5Mg0.5SiO4 (voir T. SSARKAR ET AL.: "Mechanismm of charge transfer in olivine-type LiFeSiO4 and LiFe0.5M0.5SiO4(M=Mg, Al) cathode materials: First-principles", J.PHYS.CHEM.C, vol. 119, 16 avril 2015 (2015-04-16), pages 9125-9133)

Pour une utilisation à titre de cathode de batterie lithium-ion, le silicate $Li_2MnSiO_4$ est le plus adapté car il présente des potentiel d'insertion du lithium pour les couples $Mn^{2+}/Mn^{3+}$ et $Mn^{3+}/Mn^{4+}$ (respectivement de 4,1 V et 4,5V) tous deux plus faibles que le potentiel à partir duquel une dégradation des électrolytes organiques pour batterie lithium-ion est observé (4,6 V).

Cependant, lorsqu'il forme une cathode de batterie lithium-ion, le silicate $Li_2MnSiO_4$ s'amorphise brusquement dès la première charge, ce qui se traduit par une perte progressive des performances au cours de cycles de charge/décharge de la batterie.

Il existe donc un besoin pour un matériau cristallin, silicaté, comportant un métal alcalin, notamment du lithium, et qui, lorsqu'il forme une cathode de batterie, notamment une cathode de batterie lithium-ion, conserve sa structure cristallographique au cours de cycles charge/décharge de la batterie.

Ce besoin est satisfait au moyen d'un produit constitué en tout ou partie par un matériau de structure cristallographique olivine et de formule (I):

$$A_aZ_zM_mSiO4$$

dans laquelle :

- A est choisi parmi le lithium (Li), le sodium (Na), le potassium (K) et leurs mélanges,
- Z est choisi parmi le béryllium (Be), le magnésium (Mg), le calcium (Ca), le strontium (Sr), le baryum (Ba) et leurs mélanges,
- M est choisi parmi le fer (Fe), le nickel (Ni), le cobalt (Co), le manganèse (Mn), le chrome (Cr) et leurs mélanges,
- a, z et m sont les coefficients stoechiométriques respectivement de A, Z et M, et remplissent les conditions suivantes :

  ○

$$z > 0, \, m > 0, \, a > 0,$$

  ○

$$a + z + m \leq 2,$$

et

∘

$$2 \leq (4 - a - 2z)/m < 4.$$

La structure cristallographique olivine du matériau de formule (I) favorise l'insertion et l'extraction de l'élément A. Le matériau selon l'invention est ainsi parfaitement adapté à former une cathode de batterie. L'élément A est en effet extrait de la cathode au cours de la charge et inséré dans la cathode au cours de la décharge de la batterie.

Bien que les propriétés du matériau de formule (I) aient déjà été prédites théoriquement, selon les inventeurs, la fabrication et l'obtention du matériau de formule (I) n'ont, jusqu'à présent, jamais été rapportées dans la littérature scientifique et technique.

Par exemple, l'article « Is it possible to prepare olivine-type LiFeSiO4 ? A joint computational an experimental investigation », M.E. Arroyo y de Dompablo et al., Solid State Ionics, 179 (2008), 1758-1762, décrit des tentatives pour obtenir un silicate $LiFeSiO_4$ de structure olivine ayant échouées.

Il est ainsi proposé, selon un des aspects de l'invention, un procédé de fabrication, dénommé par la suite « premier procédé », comprenant au moins les étapes successives consistant à :

a) disposer d'un premier matériau comportant au moins un métal alcalin A choisi parmi le lithium (Li), le sodium (Na), le potassium (K) et leurs mélanges, et
d'un deuxième matériau de structure cristallographique olivine de formule (III):

$$Z_{z'}M_mSiO_4,$$

dans laquelle :

- Z est choisi parmi le béryllium (Be), le magnésium (Mg), le calcium (Ca), le strontium (Sr), le baryum (Ba), et leurs mélanges,
- M est choisi parmi le fer (Fe), le nickel (Ni), le cobalt (Co), le manganèse (Mn), le chrome (Cr) et leurs mélanges,
- z' > z, z étant tel que défini précédemment, et
- m est tel que défini précédemment,

b) maintenir un bain liquide comportant, de préférence constitué par, le premier matériau en fusion et le deuxième matériau à l'état solide, à une température de maintien et pendant une durée de maintien en température propices à l'insertion d'un métal alcalin A choisi parmi le lithium (Li), le sodium (Na), le potassium (K) et leurs mélanges, et fourni par le premier matériau dans des sites libres de la structure cristallographique olivine du deuxième matériau de sorte à former un produit selon l'invention,
c) optionnellement, refroidissement du bain liquide, et
d) optionnellement, lavage puis séchage.

Selon un autre de ses aspects, l'invention concerne un procédé de fabrication d'un matériau de structure cristallographique olivine de formule (I) :

$$A_aZ_zMmSiO_4$$

dans laquelle :

- A est choisi parmi le lithium (Li), le sodium (Na), le potassium (K), et leurs mélanges,
- Z est choisi parmi le béryllium (Be), le magnésium (Mg), le calcium (Ca), le strontium (Sr), le baryum (Ba) et leurs mélanges,
- M est choisi parmi le fer (Fe), le nickel (Ni), le cobalt (Co), le manganèse (Mn), le chrome (Cr) et leurs mélanges,
- a, z et m sont les coefficients stoechiométriques respectivement de A, Z et M, et qui remplissent les conditions suivantes :

$$z > 0, \, m > 0, \, a > 0,$$

$$a + z + m \leq 2,$$

et

$$2 \leq (4 - a - 2z)\,/m < 4$$

ledit procédé comprenant au moins les étapes consistant à :

i. disposer d'un matériau de structure cristallographique olivine et de formule (II) :

$$Z_z M_m SiO_4,$$

obtenu par oxydation d'un matériau de structure cristallographique olivine de formule (III) :

$$Z_{z'} M_m SiO_4,$$

dans lesquelles Z, M, z et m sont tels que définis ci-dessus et l'indice stoechiométrique z' est tel que z' > z, et

ii. réduire électrochimiquement ledit matériau de formule (II) en présence d'une électrode source en élément A dans des conditions propices à la formation du matériau de formule (I).

Ledit procédé sera par la suite dénommé « deuxième procédé ». De préférence, le matériau de formule (I) obtenu par le deuxième procédé est constitutif du produit selon l'invention.

L'invention concerne aussi un produit obtenu par le premier procédé ainsi qu'un produit obtenu par le deuxième procédé.

Par ailleurs, elle concerne une cathode de batterie, notamment choisie parmi une cathode de batterie lithium-ion (Li-ion), une cathode de batterie sodium-ion (Na-ion), une cathode de batterie potassium-ion (K-ion), une cathode de batterie lithium (Li), une cathode de batterie sodium (Na) et une cathode de batterie potassium (K), ladite cathode de batterie comportant un produit selon l'invention, ou obtenu selon le premier procédé selon l'invention et/ou par le deuxième procédé selon l'invention.

Enfin, l'invention concerne une batterie, de préférence choisie parmi une batterie lithium-ion, une batterie sodium-ion, une batterie lithium et une batterie potassium, la batterie comportant une cathode de batterie selon l'invention.

D'autres avantages de l'invention apparaitront à la lecture de la description détaillée qui va suivre, et grâce au dessin annexé dans lequel :

- la figure 1 est un graphe représentant l'évolution du potentiel, en V $vs$ Li$^+$/Li, en fonction de la capacité spécifique nette, en mAh/g, d'une électrode positive d'une batterie comportant un exemple de réalisation du produit selon l'invention,
- la figure 2 est un graphe représentant l'évolution de la capacité spécifique, en mAh/g, de l'électrode positive de la batterie de la figure 1, en fonction du nombre de cycles de charge/décharge,
- la figure 3 est un diffractogramme par rayons X d'un composé de $MgMnSiO_4$/C préparé dans le cadre d'un exemple de mise en oeuvre du premier procédé selon l'invention,
- la figure 4 est une image du composé de $MgMnSiO_4$/C de la figure 3 prise en microscopie électronique à balayage,
- la figure 5 est un cliché de diffraction d'une particule formant le composé $MgMnSiO_4$/C de la figure 3 acquis au moyen d'un microscope électronique en transmission,
- la figure 6 est un graphe représentant l'évolution du potentiel, en V $vs$ Li$^+$/Li, en fonction de la capacité spécifique nette, en mAh/g, d'une électrode positive d'une batterie comportant un deuxième exemple de réalisation du produit selon l'invention, et

- la figure 7 est un graphe représentant l'évolution de la capacité spécifique, en mAh/g, de l'électrode positive de la batterie de la figure 6, en fonction du nombre de cycles de charge/décharge.

## PRODUIT

Le produit selon l'invention est constitué en tout ou partie par un matériau de structure olivine et de formule $A_aZ_zM_mSiO_4$.

En particulier, la somme des coefficients stoechiométriques a + z + m peut être supérieure à 1, voire supérieure à 1,5, voire supérieure à 1,9, de préférence supérieure à 1,95, voire de préférence supérieure à 1,99.

De préférence, la somme des coefficients stoechiométriques a + z + m est égale à 2. Chaque site octaédrique de la structure cristallographique du matériau est alors occupé par l'un des éléments A, Z et M.

En particulier, les coefficients stoechiométriques a, z et m peuvent être tels que z = 1 - a et/ou m = 1. De préférence, z = 1 - a et m = 1. La capacité spécifique du matériau constitutif du produit est alors optimale.

Le coefficient stoechiométrique a peut être supérieur à 0,1, voire supérieur à 0,5. De préférence, il est supérieur à 0,9 et/ou inférieur à 1, en particulier inférieur à 0,999.

De préférence, le coefficient stoechiométrique z est inférieur à 1, de préférence inférieur à 0,5, de préférence inférieur à 0,1, de préférence inférieur à 0,05, mieux inférieur à 0,01. Le nombre de sites de la structure olivine accessible à l'élément A est alors augmenté, ce qui favorise l'obtention d'une capacité spécifique du produit élevée.

Le matériau est notamment caractérisé par le fait que le coefficient stoechiométrique z est non nul. Comme cela apparaîtra par la suite, cette caractéristique est une signature des premier et deuxième procédés. Par exemple, dans un mode de réalisation, z est supérieur à 0,01, voire supérieur à 0,05, voire même supérieur à 0,1. La présence de l'élément Z, même à l'état de traces, dans le matériau peut aisément être constatée par une analyse ICP (pour « *Inductively Coupled Plasma* » en anglais).

Pour ce qui concerne le coefficient stoechiométrique m, il est de préférence compris entre 0,9 et 1,1. De préférence, il est égal à 1.

De préférence, Z est choisi parmi le magnésium (Mg), le calcium (Ca) et leurs mélanges. En particulier, Z est préférentiellement le magnésium.

De préférence, A comporte, en pourcentage molaire exprimé sur le nombre total de moles de métal alcalin constituant A, plus de 90 % de lithium et/ou de sodium.

De préférence, A est constitué à plus de 99 % de lithium, en pourcentage molaire exprimé sur le nombre total de moles de métal alcalin constituant A. De préférence, A est le lithium. Un matériau à base de lithium présente les propriétés optimales pour former une batterie lithium ion.

Un produit particulièrement préféré comporte, de préférence pour plus de 95%, de préférence pour plus de 99%, mieux pour sensiblement 100% de sa masse, un matériau de formule $Li_aMg_zMn_mSiO_4$. De préférence alors, a > 0,95, z < 0,05 et m est compris entre 0,98 et 1,02, de préférence est égal à 1.

Le produit selon l'invention peut se présenter sous des formes diverses. Par exemple, il peut se présenter sous la forme d'une poudre de particules secondaires, par exemple frittées, constituées par l'agglomération de particules primaires. Notamment, les particules primaires peuvent présenter une taille inférieure à 100 nm, de préférence de taille inférieure à 50 nm. La « taille » d'une particule primaire correspond au diamètre de ladite particule et peut être mesurée des images acquises en microscopie électronique à balayage. La conductivité électronique macroscopique du produit est alors améliorée. En outre, la surface spécifique de la particule est ainsi augmentée, facilitant l'échange avec le milieu électrolytique lorsque le produit est disposé dans une batterie. De préférence encore, les particules primaires sont recouvertes, de préférence intégralement, par une couche de carbone dont l'épaisseur est inférieure à 10 nm, pour améliorer encore la conductivité électronique du produit.

Le produit peut aussi se présenter sous la forme d'une électrode, en particulier une cathode de batterie. De préférence alors, le produit se présente sous la forme de particules faites du matériau de formule $A_aZ_zMmSiO_4$ agglomérées entre elles par du carbone. Par exemple, le produit peut comporter, une proportion massique du matériau de formule $A_aZ_zMmSiO_4$ supérieure à 50%, voire supérieure à 80%, très préférablement supérieure à 90%, le complément étant constitué par du carbone et un liant polymère. L'électrode peut en outre comporter un collecteur de courant en aluminium sur une des faces duquel le produit est disposé.

## PREMIER PROCEDE

Le produit selon l'invention peut être obtenu par le premier procédé qui est décrit ci-après.

A l'étape **a)** du premier procédé, le premier matériau comporte au moins un métal alcalin A choisi parmi le lithium (Li), le sodium (Na), le potassium (K) et leurs mélanges.

Pour fabriquer un produit selon l'invention comportant un matériau incluant du lithium, le premier matériau peut comporter un sel de lithium, de préférence choisi dans le groupe formé par $LiNO_3$, $LiCl$, $LiBr$, $LiI$, $Li_2CO_3$ et leurs mélanges.

Par exemple, le premier matériau peut être un mélange de LiNO$_3$ et LiCl. En variante, le premier matériau peut en outre comporter un sel de sodium et/ou un sel de potassium, de préférence choisi dans le groupe formé par KCl, NaCl, NaBr, KBr, NaI, KI, NaNO$_3$, KNO$_3$, Na$_2$CO$_3$, K$_2$CO$_3$ et leurs mélanges. Par exemple, il peut être un mélange de LiCl et KCl.

Pour fabriquer un produit selon l'invention comportant un matériau incluant du sodium, le premier matériau peut être un sel de sodium, de préférence choisi dans le groupe formé par NaCl, NaBr, NaI, NaNO$_3$, Na$_2$CO$_3$ et leurs mélanges. Par exemple, le premier matériau peut être un mélange de NaNO$_3$ et NaCl. En variante, le premier matériau peut en outre comporter un sel de potassium, par exemple choisi parmi KCl, KBr, KI, KNO$_3$, K$_2$CO$_3$ et leurs mélanges.

Pour fabriquer un produit selon l'invention comportant un matériau incluant du potassium, le premier matériau peut comporter un sel de potassium, de préférence choisi dans le groupe formé par KBr, KCl, KI, KNO$_3$, K$_2$CO$_3$ et leurs mélanges. Par exemple, le premier matériau peut être un mélange de KNO$_3$ et KCl.

Bien évidemment, pour fabriquer un produit comportant plusieurs éléments parmi le lithium, le sodium et le potassium, un mélange de sels de lithium et/ou de sodium et/ou de potassium tels que listés ci-dessus peut être préparé.

De préférence, le premier matériau est constitué par un mélange de sels formant une composition eutectique. Le premier matériau présente alors une température de fusion modérée, facilitant ainsi la mise en oeuvre du premier procédé.

Le premier matériau peut se présenter sous la forme d'une poudre constituée de particules. L'obtention d'une masse liquide comportant le premier matériau en fusion est ainsi facilitée.

Par ailleurs, le premier procédé met en oeuvre un deuxième matériau de structure cristallographique olivine de formule (III) Z$_{z'}$M$_m$SiO$_4$, dans laquelle Z est choisi parmi le béryllium (Be), le magnésium (Mg), le calcium (Ca), le strontium (Sr), le baryum (Ba), et leurs mélanges et M est choisi parmi le fer (Fe), le nickel (Ni), le cobalt (Co), le manganèse (Mn), le chrome (Cr) et leurs mélanges.

Par ailleurs, le coefficient stoechiométrique z' est positif. De préférence, le coefficient z' est supérieur ou égal à 0,9 et/ou inférieur ou égal à 1.

En particulier, le coefficient stoechiométrique z' peut être égal à la somme des coefficients z et a du matériau selon l'invention.

Le coefficient m est positif. En outre, de préférence, il est compris entre 0,9 et 1,1. De préférence, il est égal à 1.

En particulier, le coefficient stoechiométrique m du deuxième matériau est déterminé de sorte à définir le coefficient stoechiométrique du matériau de formule A$_a$Z$_z$MmSiO$_4$ constitutif du produit selon l'invention.

Le deuxième matériau peut se présenter sous différentes formes. Il peut se présenter sous la forme d'une poudre constituée de particules primaires dont la taille est de préférence inférieure à 100 nm, de préférence de taille inférieure à 50 nm. Les particules peuvent être agglomérées ou agrégées entre elles. De préférence, elles sont recouvertes, de préférence intégralement, par une couche de carbone d'une épaisseur inférieure à 10 nm.

Un bain liquide est formé, comportant, de préférence constitué par, le premier matériau en fusion et le deuxième matériau à l'état solide.

De préférence, le bain liquide est obtenu par fusion partielle d'une charge de départ constituée de particules formées du premier matériau et de particules formées du deuxième matériau, et de préférence intimement mélangées. En particulier, le mélange des premier et deuxième matériaux peut être réalisé au moyen d'un broyeur.

De préférence, la fusion partielle est opérée à une température supérieure à la température de fusion du premier matériau et inférieure à la température de dégradation du deuxième matériau.

Par « température de dégradation », on entend la température à partir de laquelle le matériau subit une dégradation chimique et/ou structurelle, par exemple du fait d'une démixtion, d'un changement de phase, ou d'une amorphisation.

De préférence, la température de fusion du premier matériau est inférieure à la température de dégradation du deuxième matériau, de préférence d'au moins 100°C, voire d'au moins 200°C.

Par exemple, lorsque le premier matériau est constitué par un mélange de LiNO$_3$ et LiCl, ou par un mélange de LiCl et KCl, et le deuxième matériau est MgMnSiO$_4$, la fusion partielle est opérée à une température comprise entre 200°C et 500°C.

De préférence, les étapes de mélange des premier et deuxième matériaux formant la charge de départ est réalisée conjointement à l'étape de chauffage de la charge de départ pour former le bain liquide.

Dans une variante, afin de former le bain liquide, on peut chauffer le premier matériau dans un creuset jusqu'à l'obtention d'une masse liquide en fusion. Le deuxième matériau peut alors être mélangé avec la masse liquide pour former le bain liquide. Par exemple, le deuxième matériau peut être versé dans le moule contenant la masse liquide. Alternativement, la masse liquide peut être versée dans un moule contenant le deuxième matériau.

A l'étape **b)**, le bain liquide est alors maintenu à une température de maintien et pendant une durée de maintien en température propices à la formation d'un matériau de structure cristallographique olivine de formule A$_a$Z$_z$MmSiO$_4$ selon l'invention.

La fusion de la charge de départ et/ou le maintien en température du bain liquide peut être réalisée au moyen de tout type de four. Par exemple, un four à moufle ou un four tubulaire comportant un moule en quartz, porcelaine, alumine, zircone ou platine peut être utilisé.

De préférence, la température de maintien est supérieure à la température de fusion du premier matériau et inférieure à la température de dégradation du deuxième matériau. De préférence, elle est supérieure d'au moins 10°C à la température de fusion du premier matériau et/ou inférieure d'au moins 10°C à la température de dégradation du deuxième matériau.

La durée de maintien en température est de préférence comprise entre cinq minutes et cinq jours.

Par exemple, lorsque le premier matériau est constitué par un mélange de $LiNO_3$ et LiCl, ou par un mélange de LiCl et KCl, et le deuxième matériau est $MgMnSiO_4$, la température de maintien est comprise entre 200°C et 500°C, et la durée de maintien en température est comprise entre 2 heures et 2 jours.

A l'étape **c)**, le bain liquide est refroidi jusqu'à ce qu'il forme un bain solidifié, de préférence jusqu'à une température inférieure à 40°C. Le bain solidifié comporte alors le produit selon l'invention ainsi que des composés reliquats du processus de diffusion de l'étape b).

Le bain solidifié peut être lavé, à l'étape **d)**, de sorte à séparer le produit selon l'invention des composés reliquats. Le lavage peut notamment être effectué avec de l'eau ou de l'éthanol. Le produit selon l'invention lavé peut ensuite être séché, par exemple sous vide, à une température supérieure à 60°C et/ou pendant une durée d'au moins 12 heures.

## DEUXIEME PROCEDE

Alternativement au premier procédé décrit précédemment, un deuxième procédé peut être mis en oeuvre pour fabriquer le produit selon l'invention.

A l'étape **i)**, on dispose d'un matériau de structure cristallographique olivine et de formule (II) $Z_zM_mSiO_4$ obtenu par oxydation d'un matériau de structure cristallographique olivine de formule (III) $Z_{z'}M_mSiO_4$.

Le matériau de formule (III) du deuxième procédé selon l'invention est notamment identique au deuxième matériau du premier procédé selon l'invention.

En particulier, le coefficient stoechiométrique z' est supérieur à z. De préférence, z' est inférieur ou égal à 1.

Pour ce qui concerne le matériau de formule (II), de préférence, z est inférieur à 1, de préférence inférieur à 0,5, de préférence inférieur à 0,1, voire de préférence inférieur à 0,05.

Selon un premier mode de réalisation, le matériau de formule (II) $Z_zM_mSiO_4$ peut être, préalablement à sa réduction en étape **ii)**, généré par oxydation électrochimique de l'élément M constitutif du matériau de formule (III). Par réaction (et notamment oxydation et réduction) « électrochimique », on considère une réaction d'oxydo-réduction mettant en jeu un transfert électronique, et réalisée au moyen d'une cellule électrochimique dotée classiquement d'une électrode de travail, d'une contre-électrode, d'un milieu électrolytique, et optionnellement d'un séparateur.

De préférence, l'oxydation électrochimique est réalisée au moyen d'un milieu électrolytique comprenant une source en élément A.

En particulier, le milieu électrolytique mis en oeuvre pour l'étape de réduction électrochimique peut être identique au milieu électrolytique mis en oeuvre pour l'étape d'oxydation électrochimique.

Par exemple, l'élément A est le lithium et le milieu électrolytique comprend une source du lithium, en particulier sous la forme d'un composé choisi parmi l'hexafluorophosphate de lithium ($LiPF_6$), le perchlorate de lithium ($LiClO_4$), l'arsenate de lithium ($LiAsO_4$), le tétrafluoroboate de lithium ($LiBF_4$), le bis-trifluoromethanesulfonimide de lithium (LiTFSI), le bis(oxalato)borate de lithium (LiBOB), le bis(fluorosulfonyl)imide de lithium (LiFSI), l'hexafluoroarsenate de lithium ($LiAsF_6$), le triflate de lithium ($LiSO_3CF_3$), le trifluoroacetate de lithium ($LiCF_3CO_2$), l'hexafluoroantimonate de lithium ($LiSbF_6$), $LiN(CF_3SO_2)_3$, $LiN(C_2F_5SO_2)$, et leurs mélanges.

Par ailleurs, l'électrolyte peut comporter, par exemple à titre de solvant, un carbonate, choisi par exemple parmi l'éthyl- carbonate, le diéthyl- carbonate, l'éthyl-méthyl- carbonate, le diméthyl- carbonate, le carbonate de propylène et leurs mélanges. De préférence, la source en élément A, par exemple en lithium, est dissoute dans le carbonate.

De préférence, le matériau de formule (III) est oxydé en tant qu'électrode de travail face à une contre-électrode. Ainsi, l'extraction des ions $Z^{2+}$ du matériau de formule (III) est optimale. Dans tous les cas, pour que l'extraction des ions $Z^{2+}$ du matériau de formule (III) puisse s'opérer, le potentiel redox de la contre-électrode doit être inférieur au potentiel redox du couple $M^{2+}/M^{3+}$ de l'élément M du matériau de formule (III).

Le matériau de formule (II) $Z_zM_mSiO_4$ est de structure cristallographique olivine. Toutefois, il est caractérisé par le fait que la structure cristallographique olivine présente des sites inoccupés, notamment par l'élément Z. Une caractéristique du deuxième procédé réside, au cours de l'étape ii) de réduction électrochimique, en l'insertion dans les sites inoccupés d'un ou plusieurs métaux alcalins A, de sorte à obtenir le produit selon l'invention de formule (I) $A_aZ_zM_mSiO_4$.

L'électrode peut se présenter sous la forme de particules du matériau de formule (III) constitué de particules primaires, de préférence d'une taille inférieure à 100 nm, de préférence de taille inférieure à 50 nm, et de préférence recouvertes, de préférence intégralement par une couche de carbone, d'une épaisseur de préférence inférieure à 10

**EP 3 293 148 B1**

nm. Les particules peuvent notamment être liées entre elles par une matrice carbonée, pour améliorer la conduction électrique au sein de l'électrode et un par un liant polymère pour assurer la cohésion et la tenue mécanique de l'électrode.

Par exemple, la contre électrode est en un matériau comportant l'élément A. De préférence, pour fabriquer un matériau de formule (I) avec A étant Li et/ou Na et/ou K, la contre électrode est en un matériau en Li et/ou Na et/ou K respectivement, sous forme métallique.

En particulier, au cours de l'oxydation électrochimique, le métal de transition M peut s'oxyder de l'état +2 à l'état +4 et l'ion $Z^{2+}$ est extrait de la structure, selon la demi-équation d'oxydoréduction suivante :

$$Z_{z'}M_mSiO_4 \rightarrow Z_zM_mSiO_4 + 2(z'\text{-}z)\ e^- + (z'\text{-}z)\ Z^{2+}$$

L'oxydation électrochimique peut être effectuée selon différents modes, par exemple à courant constant, à tension constante, à courant croissant imposé, à tension croissante imposée. La température de l'électrolyte peut être comprise entre 20°C et 60°C. L'oxydation électrochimique est effectuée selon un régime C/x, avec x compris entre 5 et 100, par exemple égal à 20. Un régime C/x correspond à une charge effectuée en x heures. Par exemple un régime C/20 correspond à une charge en 20 heures.

Après réalisation de la réaction d'oxydation électrochimique, le produit de formule (II) obtenu peut être lavé puis séché.

Selon un deuxième mode de réalisation alternatif, le matériau de formule (II) est préalablement à sa réduction en étape **ii)**, généré par oxydation chimique du matériau de formule (III). Par oxydation chimique, on considère ici une réaction ne nécessitant aucune activation électronique contrairement à une oxydation électrochimique.

De préférence, l'oxydation chimique met en oeuvre au moins un composé oxydant dont le potentiel d'oxydo-réduction est supérieur au potentiel d'oxydoréduction du couple $M^{2+}/M^{3+}$ et/ou du couple $M^{3+}/M^{4+}$ de l'élément M constitutif du matériau de formule (III).

Le composé oxydant peut notamment être choisi parmi le tétrafluoroborate de nitronium ($NO_2BF_4$), le persulfate de potassium ($K_2S_2O_8$), l'hexafluorophosphate de nitrosonium ($NO_2PF_6$), le tétrafluoroborate de nitrosonium ($NOBF_4$), le péroxyde d'hydrogène ($H_2O_2$) et leurs mélanges.

De préférence l'oxydation chimique est réalisée au sein d'un bain liquide contenant au moins ledit matériau de formule (III) et ledit composé oxydant et dans des conditions propices à l'extraction de l'élément Z dudit matériau de formule (III) pour former ledit matériau de formule (II) attendu.

Par exemple, le bain peut comporter de l'acétonitrile et la réaction d'oxydation chimique peut être effectuée à une température de 60°C sous reflux pendant une durée égale à 48 heures.

A titre illustratif, l'oxydation chimique du matériau de formule (III) avec le tétrafluoroborate de nitronium ($NO_2BF_4$), qui présente un potentiel de 5,1V contre le couple $Li^+/Li$ s'effectue selon la réaction suivante :

$$Z_{z'}M_mSiO_4 + 2(z'\text{-}z)NO_2BF_4 \rightarrow Z_zM_mSiO_4 + 2(z'\text{-}z)NO_2(g) + (z'\text{-}z)Z(BF4)2.$$

Après réalisation de l'oxydation chimique, le matériau de formule (II) obtenu peut être lavé puis séché.

Comme cela a été décrit ci-dessus, le matériau de formule (II) du deuxième procédé peut alors constituer le deuxième matériau du premier procédé.

En variante, selon le deuxième procédé, qu'il soit obtenu par échange chimique ou par échange électrochimique, le matériau de formule (II) peut être réduit électrochimiquement en présence d'une électrode source en élément A dans des conditions propices à la formation d'un matériau de formule (I).

En particulier pour réaliser la réduction électrochimique en étape ii), le matériau de formule (II) peut former tout ou partie d'une électrode.

L'électrode peut se présenter sous la forme de particules du matériau de formule (II), de préférence d'une taille inférieure à 100 nm, de préférence de taille inférieure à 50 nm, et de préférence recouvertes, de préférence intégralement par une couche de carbone, d'une épaisseur de préférence inférieure à 10 nm. Les particules peuvent notamment être liées entre elles par une matrice carbonée, pour améliorer la conduction électrique au sein de l'électrode et un par un liant polymère pour assurer la cohésion et la tenue mécanique de l'électrode.

De préférence, la réduction électrochimique met aussi en oeuvre une contre-électrode en un matériau comportant l'élément A. De préférence, pour fabriquer un matériau de formule (I) avec A étant Li et/ou Na et/ou K, la contre électrode est en un matériau en Li et/ou Na et/ou K, respectivement, sous forme métallique.

De préférence, la réduction électrochimique est réalisée au moyen d'un milieu électrolytique comprenant une source en élément A.

En particulier, le milieu électrolytique mis en oeuvre pour l'étape de réduction électrochimique en étape **ii)** peut être identique au milieu électrolytique mis en oeuvre pour l'étape d'oxydation électrochimique en étape **i)**.

Par exemple, l'élément A est le lithium et le milieu électrolytique comprend une source du lithium, en particulier sous la forme d'un composé choisi parmi l'hexafluorophosphate de lithium ($LiPF_6$), le perchlorate de lithium ($LiClO_4$),

l'arsenate de lithium (LiAsO$_4$), le tétrafluoroboate de lithium (LiBF$_4$), le bis-trifluoromethanesulfonimide de lithium (LiTFSI), le bis(oxalato)borate de lithium (LiBOB), le bis(fluorosulfonyl)imide de lithium (LiFSI), l'hexafluoroarsenate de lithium (LiAsF$_6$), le triflate de lithium (LiSO$_3$CF$_3$), le trifluoroacetate de lithium (LiCF$_3$CO$_2$), l'hexafluoroantimonate de lithium (LiSbF$_6$), LiN(CF$_3$SO$_2$)$_3$, LiN(C$_2$F$_5$SO$_2$), et leurs mélanges.

Par ailleurs, l'électrolyte peut comporter un carbonate, choisi par exemple parmi l'éthyl- carbonate, le diéthyl-carbonate, l'éthyl- méthyl- carbonate, le diméthyl- carbonate, le carbonate de propylène et leurs mélanges. De préférence, la source en élément A, par exemple en lithium, est dissoute dans le carbonate.

De préférence, lorsque le matériau de formule (II) est préparé par oxydation électrochimique, l'électrode et la contre-électrode à la fin de l'étape de réaction d'oxydation électrochimique peuvent constituer l'électrode et la contre-électrode respectivement au début de l'étape de réduction électrochimique. La température de l'électrolyte peut être comprise entre 20°C et 60°C. L'oxydation électrochimique est effectuée selon un régime C/x, avec x compris entre 5 et 100, par exemple égal à 20.

L'étape de réduction électrochimique peut être mise en oeuvre à courant constant, tension constante, courant décroissant imposé, tension décroissante imposée. Elle n'est toutefois pas limitée à ce mode de mise en oeuvre.

## EXEMPLES

### Exemple 1

Une encre est préparée en mélangeant, en pourcentage en masse, 10% de carbone super P-C65, 10% de difluorure de polyvinylidène (PVDF) et 80% d'une poudre de particules de MgMnSiO$_4$ d'une taille moyenne de 50 nm et recouvertes d'une couche de carbone.

L'encre est enduite sur un feuillard d'aluminium puis est séchée sous vide à 60°C pendant 24 heures. Une électrode est ensuite découpée dans le feuillard d'aluminium recouvert de l'encre ayant séchée. L'électrode est ensuite pressée, puis est séchée sous vide à 80°C pendant 48 heures.

Une cellule d'électrolyse se présentant sous la forme d'une pile bouton au format CR2032 est fabriquée et comporte l'électrode incluant le matériau MgMnSiO$_4$ et une contre-électrode de lithium (Li) métallique. Un séparateur, constitué d'une membrane de marque Viledon de référence FS 2207-2- DA WA et d'une membrane Celgard 2400, est disposé entre l'électrode et la contre-électrode. Les électrodes, contre électrode et séparateur sont immergés dans un électrolyte liquide constitué d'un solvant formé de trois parts égales de éthyl-carbonate, diéthyl- carbonate et éthyl-méthyl- carbonate, dans lequel est dissous de l'hexafluorophosphate de lithium (LiPF$_6$) à une concentration de 1 mol/l.

Une première phase d'oxydation électrochimique est réalisée de manière à extraire partiellement l'élément Mg de l'électrode positive MgMnSiO$_4$.

Une phase de réduction électrochimique est ensuite effectuée, permettant d'insérer des ions lithium en lieu et place des ions Mg extraits lors de la première phase d'oxydoréduction, de manière à former un matériau de formule Li$_a$Mg$_z$MnSiO$_4$ (avec a<1 et z<1).

La cellule d'électrolyse est alors soumise à des cycles formés d'une charge galvanostatique suivie d'une décharge galvanostatique, imposés à un régime de C/20-D20 entre un potentiel de 1,5V et 4,8V vs. Li+/Li à 25°C.

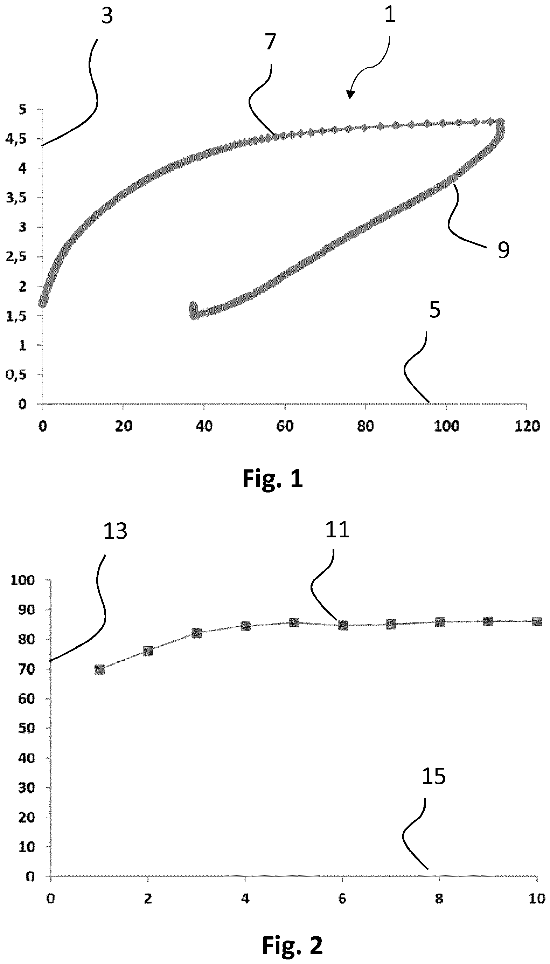

La figure 1 représente l'évolution 1 au cours d'un cycle de charge-décharge du potentiel 3 de l'électrode positive Li$_a$Mg$_z$MnSiO$_4$ (z<1 et a<1) en fonction de la capacité spécifique nette de matériau actif 5. Au cours de la charge 7, des ions Li$^+$ sont désinsérés de l'électrode positive Li$_a$Mg$_z$MnSiO$_4$ et sont déposés sur l'électrode négative, de sorte qu'un matériau de formule Li$_{a'}$Mg$_z$MnSiO$_4$ (avec a'<a) soit formé. Au cours de la décharge 9, les réactions d'oxydoréduction inverses se produisent.

La figure 2 représente l'évolution 11 de la capacité spécifique de l'électrode positive 13 en décharge en fonction du nombre de cycles 15.

Comme cela est observé, une capacité spécifique réversible de 85 mAh/g est obtenue pour le composite formé par le silicate lithié et le carbone sous forme de couche, ce qui correspond à une capacité réversible de 97 mAh/g pour le seul silicate lithié, et aucune dégradation de la capacité n'est observée au fur et à mesure des cycles.

Par ailleurs, aussi bien au cours de la charge que de la décharge, le matériau électrochimiquement actif de l'électrode positive conserve sa structure cristallographique olivine, comme cela peut être constaté par diffraction des rayons X.

### Exemple 2

*Etape 1*

Un composé de formule MgMnSiO$_4$/C est synthétisé par voie sol-gel. Dans un premier bêcher, 4,26 g d'acétate de magnésium tétra- hydraté pour plus de 95% de sa masse, et 4,71 g d'acétate de manganèse tri- et tétra- hydraté sont dissouts, sous agitation, dans une solution aqueuse acide formée de 1 ml d'acide acétique dilué dans 13,55 ml d'eau déionisée. Dans un second bécher sont dissouts 15,00g de P123 (copolymère tri-blocs PEO-PPO-PEO) et 4,47 ml de tétraéthoxysilane (TEOS) sous agitation. La solution contenue dans le premier bécher est ajoutée dans le second bécher. Le mélange est agité au moyen d'un agitateur magnétique pendant une nuit. La gélification se produit après 4 jours. Le gel obtenu est ensuite séché sous air à une température de 80°C pendant une semaine. Le xérogel ainsi obtenu est broyé puis pyrolysé en demi-tube dans un four tubulaire sous argon pendant une durée de 24 h à une température de 900°C.

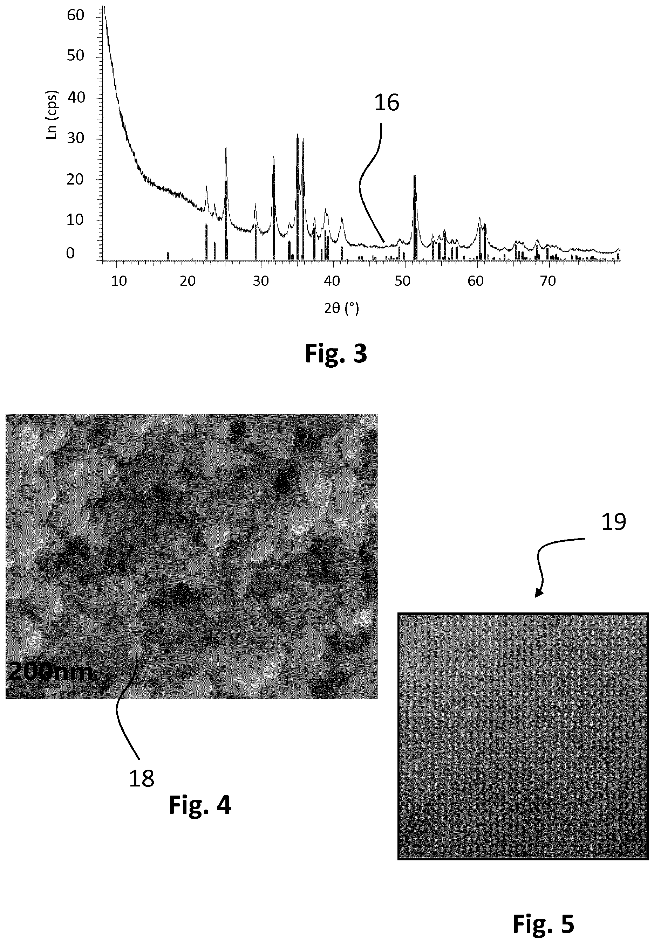

Le diffractogramme 16 de rayons X illustré sur la figure 3 indique que le composé de formule $MgMnSiO_4$ obtenu au paragraphe précédent cristallise dans le système orthorhombique de groupe d'espace *Pnma.* Comme observé sur la figure 4, le composé se présente sous forme de particules primaires 18 présentant une taille d'environ 50 nm, et comme le confirme le cliché de diffraction 19 présenté sur la figure 5, une structure cristallisée dont le groupe d'espace est en accord avec celui déterminé au moyen du diffractogramme de la figure 3.

*Etape 2*

Par la suite, 0,488 g du composé de formule $MgMnSiO_4$/C obtenu à l'étape 1 sont broyés avec 0,882 g de chlorure de lithium (LiCl) et 1,044 g de chlorure de potassium (KCl), correspondant à une composition eutectique du diagramme binaire LiCl-KCl, de sorte à former un mélange.

Le mélange est pyrolysé dans un four tubulaire sous une atmosphère d'argon pendant une durée de 40 h à une température de 400°C. Au cours du traitement de pyrolyse, la composition eutectique de LiCl-KCl fond et forme un bain de sels fondus, dans lequel s'opère un réarrangement des éléments Mg et Mn au sein de la structure cristallographique de $MgMnSiO_4$/C vers un état plus ordonné.

La poudre de $MgMnSiO_4$/C résultant du traitement de pyrolyse est transférée dans une boîte à gants tout en évitant le contact avec l'air ambiant. Elle est lavée à l'éthylène glycol anhydre et séchée sous vide à une température de 150°C pendant 24h.

*Etape 3*

0,374 g de la poudre de $MgMnSiO_4$/C obtenue en fin d'étape 2 est dispersée au moyen de 50 ml d'acétonitrile anhydre dans un ballon en boîte à gants. Dans une autre boîte à gants, 1,233 g de tétrafluoroborate de nitronium sont dissous dans 50 ml d'acétonitrile anhydre et introduits dans une ampoule de coulée. L'ampoule de coulée est ensuite connectée au ballon de manière que l'ensemble formé par l'ampoule de coulée et le ballon et les moyens de connexion les reliant soient étanches et rempli d'argon. L'ensemble est connecté à un montage à reflux et est maintenu sous atmosphère d'argon. La solution de tétrafluoroborate de nitronium est versée goutte après goutte dans la poudre dispersée contenue dans le ballon. Le ballon est agité et maintenu en température à 60°C pendant une durée de 32 h. La poudre ainsi traitée est ensuite lavée à l'acétonitrile, puis filtrée et séchée à une température de 80°C sous vide.

Au cours de l'étape 3, la poudre de $MgMnSiO_4$/C est oxydée et des atomes de magnésium sont extraits des sites qu'ils occupent dans la structure olivine. On obtient ainsi une poudre de particules de $Mg_zMnSiO_4$/C, avec z < 1.

*Etape 4*

Une encre est ensuite préparée, comportant en pourcentages massiques sur la base de la masse de l'encre, 80% de la poudre de $Mg_zMnSiO_4$/C obtenue en fin d'étape 3, 10% de carbone super P-C65 et 10% de diflurorure de polyvinylidène (PVDF). Après enduction sur un feuillard d'aluminium puis séchage sous vide à une température de 60°C pendant une durée de 24 h, des électrodes sont découpées puis calandrées en boîte à gants et enfin séchées pendant une durée de 48 h sous vide, à une température de 80°C.

Une lithiation d'une des électrodes découpées est réalisée en pile bouton (format CR2032). L'électrode définit une électrode positive et une contre-électrode de lithium métallique est utilisée. Un séparateur de la pile est formé d'une couche de Videlon et d'une couche de Celgard 2400. L'électrolyte est constitué d'un mélange d'une part en volume d'éthyl-carbonate (EC), d'une part en volume de diméthyl-carbonate (DMC) et d'une part en volume d'éthyl-méthyl-carbonate (EMC), dans lequel est dissous de l'hexafluorophosphate de lithium ($LiPF_6$) dans une concentration de 1 mol/l. Une première décharge est effectuée à un régime de C/10 (1C=174 mA/g) de sorte à introduire des ions lithium dans le matériau $Mg_zMnSiO_4$ de l'électrode positive. Ensuite, une succession de cycles de charge/décharge galvanostatiques sont imposés à un régime de C/5 entre 1,5 V et 4,8 V *vs* Li⁺/Li, à température ambiante.

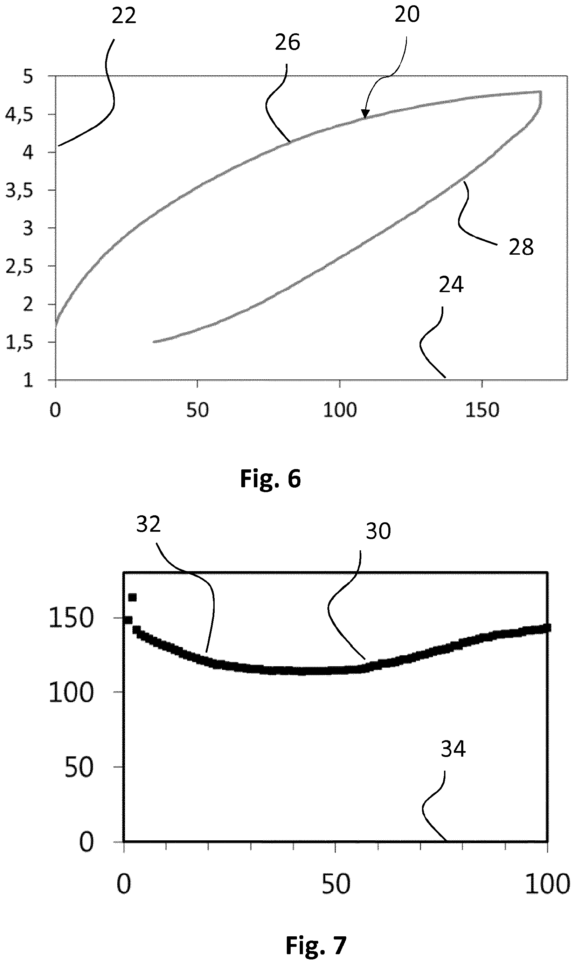

La figure 6 représente l'évolution 20 au cours d'un cycle de charge-décharge du potentiel 22 de l'électrode positive $Li_aMg_zMnSiO_4$ (a<1) en fonction de la capacité spécifique nette de matériau actif 24. Au cours de la charge 26, des ions Li+ sont désinsérés de l'électrode positive $Li_aMg_zMnSiO_4$ et sont déposés sur l'électrode négative, de sorte qu'un matériau de formule $Li_{a'}Mg_zMnSiO_4$ (avec a'<a) soit formé. Au cours de la décharge 28, les réactions d'oxydoréduction inverses se produisent.

La figure 7 représente l'évolution 30 de la capacité spécifique de l'électrode positive 32 en décharge en fonction du nombre de cycles 34.

Comme cela est observé, une capacité spécifique réversible supérieure à 110 mAh/g est obtenue pour le composite formé par le silicate lithié.

Par ailleurs, aussi bien au cours de la charge que de la décharge, le matériau électrochimiquement actif de l'électrode positive conserve sa structure cristallographique olivine, comme cela peut être constaté par diffraction des rayons X.

Enfin, le matériau selon l'invention présente une excellente stabilité thermique, et il est formé d'éléments moins coûteux et moins nocifs pour l'environnement que les matériaux de l'art antérieur.

Bien entendu, l'invention n'est pas limitée aux modes de réalisation du produit et aux modes de mise en oeuvre du procédé présentés dans la présente description.

Par ailleurs, sauf indication contraire, une inégalité du type « A supérieur à B », respectivement « A inférieur à B » est considérée strictement. Autrement dit, l'égalité entre A et B est exclue. Par ailleurs, les expressions « comportant un » et « comportant au moins un » sont équivalentes.

**Revendications**

1. Procédé de fabrication d'un matériau de structure cristallographique olivine de formule (I) :

$$A_aZ_zMmSiO_4$$

dans laquelle :

- A est choisi parmi le lithium (Li), le sodium (Na), le potassium (K), et leurs mélanges,
- Z est choisi parmi le béryllium (Be), le magnésium (Mg), le calcium (Ca), le strontium (Sr), le baryum (Ba) et leurs mélanges,
- M est choisi parmi le fer (Fe), le nickel (Ni), le cobalt (Co), le manganèse (Mn), le chrome (Cr) et leurs mélanges,
- a, z et m sont les coefficients stoechiométriques respectivement de A, Z et M, et qui remplissent les conditions suivantes :

  ○

  $$z > 0, \; m > 0, \; a > 0,$$

  ○

  $$a + z + m \leq 2,$$

  et
  ○

  $$2 \leq (4 - a - 2z)/m < 4$$

ledit procédé comprenant au moins les étapes consistant à :

i. disposer d'un matériau de structure cristallographique olivine et de formule (II) :

$$Z_zM_mSiO_4,$$

obtenu par oxydation d'un matériau de structure cristallographique olivine de formule (III) :

$$Z_{z'}M_mSiO_4,$$

**EP 3 293 148 B1**

dans lesquelles Z, M, z et m sont tels que définis ci-dessus et l'indice stoechiométrique z' est tel que z' > z, et

**ii.** réduire électrochimiquement ledit matériau de formule (II) en présence d'une électrode source en élément A dans des conditions propices à la formation du matériau de formule (I).

**2.** Procédé selon la revendication 1, dans lequel a + z + m = 2.

**3.** Procédé selon l'une quelconque des revendications 1 ou 2, dans lequel z = 1 - a et/ou m=1.

**4.** Procédé selon l'une quelconque des revendications 1 à 3, dans lequel z < 0,5, de préférence z < 0,1, voire de préférence z < 0,05, mieux z < 0,01.

**5.** Procédé selon l'une quelconque des revendications précédentes, dans lequel Z est le magnésium et/ou M est le manganèse et/ou A est le lithium.

**6.** Procédé selon l'une quelconque des revendications précédentes **caractérisé en ce que** le matériau de formule (II), forme tout ou partie d'une électrode.

**7.** Procédé selon l'une quelconque des revendications précédentes **caractérisé en ce que** la réduction électrochimique est réalisée au moyen d'un milieu électrolytique comprenant une source en élément A, de préférence A étant le lithium et ledit milieu électrolytique comprenant une source du lithium, en particulier sous la forme d'un composé choisi parmi l'hexafluorophosphate de lithium ($LiPF_6$), le perchlorate de lithium ($LiClO_4$), l'arsenate de lithium ($LiAsO_4$), le tétrafluoroborate de lithium ($LiBF_4$), le bis-trifluoromethanesulfonimide de lithium (LiTFSI), le bis(oxalato)borate de lithium (LiBOB), le bis(fluorosulfonyl)imide de lithium (LiFSI), l'hexafluoroarsenate de lithium ($LiAsF_6$), le triflate de lithium ($LiSO_3CF_3$), le trifluoroacetate de lithium ($LiCF_3CO_2$), l'hexafluoroantimonate de lithium ($LiSbF_6$), $LiN(CF_3SO_2)_3$, $LiN(C_2F_5SO_2)$, et leurs mélanges.

**8.** Procédé selon l'une quelconque des revendications précédentes, dans lequel le matériau de formule (II) est, préalablement à sa réduction, généré par oxydation électrochimique de l'élément M constitutif dudit matériau de formule (III), ledit matériau de formule (III) étant de préférence oxydé en tant qu'électrode de travail face à une contre-électrode

**9.** Procédé selon la revendication 8, dans lequel ledit matériau de formule (III) est mis en oeuvre sous la forme d'une électrode $Z_{z'}M_mSiO_4$, dans laquelle Z, M, z' et m sont tels que définis en revendications 1 à 4, et de préférence $MgMnSiO_4$.

**10.** Procédé selon l'une quelconque des revendications 8 et 9, dans lequel l'oxydation du matériau de formule (III) en matériau de formule (II) et la réduction du matériau de formule (II) en matériau de formule (I) sont réalisées dans une même cellule électrochimique et/ou l'oxydation du matériau de formule (III) en matériau de formule (II) et la réduction du matériau de formule (II) en matériau de formule (I) sont réalisées au niveau d'une unique électrode dont lesdits matériaux de formule (III) et (II) en sont consécutivement un composant.

**11.** Procédé selon l'une quelconque des revendications 8 à 10, mettant en oeuvre au moins un cycle de charge/décharge, chaque cycle étant de préférence constitué par la succession des étapes d'oxydation électrochimique et de réduction électrochimique.

**12.** Procédé selon l'une quelconque des revendications 1 à 7, dans lequel ledit matériau de formule (II) est au préalable généré par oxydation chimique du matériau de formule (III).

**13.** Procédé selon la revendication 12, dans lequel ladite oxydation chimique met en oeuvre au moins un composé oxydant dont le potentiel d'oxydoréduction est supérieur au potentiel d'oxydoréduction du couple $M^{2+}/M^{3+}$ et/ou du couple $M^{3+}/M^{4+}$ de l'élément M constitutif dudit matériau de formule (III), le composé oxydant étant de préférence choisi parmi le tétrafluoroborate de nitronium ($NO_2BF_4$), le persulfate de potassium ($K_2S_2O_8$), l'hexafluorophosphate de nitrosonium ($NO_2PF_6$), le tétrafluoroborate de nitrosonium ($NOBF_4$), le péroxyde d'hydrogène ($H_2O_2$) et leurs mélanges.

**14.** Procédé selon l'une quelconque des revendications 12 et 13, dans lequel ladite oxydation chimique est réalisée au sein d'un bain liquide contenant au moins ledit matériau de formule (III) et ledit composé oxydant et dans des conditions propices à l'extraction de l'élément Z dudit matériau de formule (III) pour former ledit matériau de formule (II) attendu.

**12**

**15.** Matériau d'électrode obtenu par le procédé selon l'une quelconque des revendications précédentes.

**Patentansprüche**

**1.** Verfahren zur Herstellung eines Materials mit einer kristallografischen Olivinstruktur der Formel (I):

$$A_aZ_zM_mSiO_4$$

worin:

- A ausgewählt ist aus Lithium (Li), Natrium (Na), Kalium (K) und Mischungen davon,
- Z ausgewählt ist aus Beryllium (Be), Magnesium (Mg), Calcium (Ca), Strontium (Sr), Barium (Ba) und Mischungen davon,
- M ausgewählt ist aus Eisen (Fe), Nickel (Ni), Cobalt (Co), Mangan (Mn), Chrom (Cr) und Mischungen davon,
- a, z und m die stöchiometrischen Koeffizienten von A, Z bzw. M sind, die die folgenden Bedingungen erfüllen:

  •

$$z > 0, \; m > 0, \; a > 0,$$

  •

$$a + z + m \leq 2,$$

und
  •

$$2 \leq (4 - a - 2z)\, /m < 4$$

wobei das Verfahren mindestens die folgenden Schritte umfasst:

i. Vorsehen eines Materials mit einer kristallografischen Olivinstruktur und der Formel (II):

$$Z_zM_mSiO_4,$$

das durch Oxidation eines Materials mit einer kristallografischen Olivinstruktur der Formel (III) :

$$Z_{z'}M_mSiO_4,$$

worin Z, M, z und m so sind wie oben definiert und der stöchiometrische Index z' derart ist, dass z' > z, erhalten wurde, und
ii. elektrochemisches Reduzieren des Materials der Formel (II) in Gegenwart einer Quellenelektrode aus Element A unter Bedingungen, die zur Bildung des Materials der Formel (I) geeignet sind.

**2.** Verfahren nach Anspruch 1, wobei a + z + m = 2.

**3.** Verfahren nach einem der Ansprüche 1 oder 2, wobei z = 1 - a und/oder m = 1.

**4.** Verfahren nach einem der Ansprüche 1 bis 3, wobei z < 0,5, vorzugsweise z < 0,1, vorzugsweise sogar z < 0,05, besser z < 0,01.

**5.** Verfahren nach einem der vorhergehenden Ansprüche, wobei Z Magnesium ist und/oder M Mangan ist und/oder A Lithium ist.

6. Verfahren nach einem der vorhergehenden Ansprüche, **dadurch gekennzeichnet, dass** das Material der Formel (II) die gesamte oder einen Teil der Elektrode bildet.

7. Verfahren nach einem der vorhergehenden Ansprüche, **dadurch gekennzeichnet, dass** die elektrochemische Reduktion unter Verwendung eines elektrolytischen Mediums durchgeführt wird, umfasst eine Quelle für Element A, wobei A vorzugsweise Lithium ist und das elektrolytische Medium eine Lithiumquelle umfasst, insbesondere in Form einer Verbindung ausgewählt aus Lithiumhexafluorphosphat (LiPF$_6$), Lithiumperchlorat (LiClO$_4$), Lithiumarsenat (LiAsO$_4$), Lithiumtetrafluorborat (LiBF$_4$), Lithiumbis(trifluormethansulfonimid) (LiTFSI), Lithiumbis(oxalato)borat (LiBOB), Lithiumbis(fluorsulfonyl)imid (LiFSI), Lithiumhexafluorarsenat (LiAsF$_6$), Lithiumtriflat (LiSO$_3$CF$_3$) Lithiumtrifluoracetat (LiCF$_3$CO$_2$), Lithiumhexafluorantimonat (LiSbF$_6$), LiN(CF$_3$SO$_2$)$_3$, LiN(C$_2$F$_5$SO$_2$) und Mischungen davon.

8. Verfahren nach einem der vorhergehenden Ansprüche, wobei das Material der Formel (II) vor seiner Reduktion durch elektrochemische Oxidation des Bestandteils M des Materials der Formel (III) erzeugt wird, wobei das Material der Formel (III) vorzugsweise als Arbeitselektrode gegenüber einer Gegenelektrode oxidiert wird.

9. Verfahren nach Anspruch 8, wobei das Material der Formel (III) in Form einer Elektrode $Z_{z'}M_mSiO_4$ verwendet wird, wobei Z, M, z' und m so sind, wie in den Ansprüchen 1 bis 4 definiert, und vorzugsweise MgMnSiO$_4$ sind.

10. Verfahren nach einem der Ansprüche 8 und 9, wobei die Oxidation des Materials der Formel (III) zum Material der Formel (II) und die Reduktion des Materials der Formel (II) zum Material der Formel (I) in derselben elektrochemischen Zelle durchgeführt werden und/oder die Oxidation des Materials der Formel (III) zum Material der Formel (II) und die Reduktion des Materials der Formel (II) zum Material der Formel (I) an einer einzigen Elektrode durchgeführt werden, wobei die Materialien der Formel (III) und (II) aufeinanderfolgend deren Bestandteil sind.

11. Verfahren nach einem der Ansprüche 8 bis 10, wobei mindestens ein Lade-/Entladezyklus verwendet wird, wobei jeder Zyklus vorzugsweise aus der Abfolge der elektrochemischen Oxidations- und der elektrochemischen Reduktionsschritte besteht.

12. Verfahren nach einem der Ansprüche 1 bis 7, wobei das Material der Formel (II) zuvor durch chemische Oxidation des Materials der Formel (III) erzeugt wird.

13. Verfahren nach Anspruch 12, wobei die chemische Oxidation mindestens eine oxidierende Verbindung verwendet, deren Redoxpotential größer ist als das Redoxpotential des Paares $M^{2+}/M^{3+}$ und/oder des Paares $M^{3+}/M^{4+}$ des Elements M, das Bestandteil des Materials der Formel (III) ist, wobei die oxidierende Verbindung vorzugsweise ausgewählt ist aus Nitroniumtetrafluorborat (NO$_2$BF$_4$), Kaliumpersulfat (K$_2$S$_2$O$_8$), Nitrosoniumhexafluorphosphat (NO$_2$PF$_6$), Nitrosoniumtetrafluorborat (NOBF$_4$), Wasserstoffperoxid (H$_2$O$_2$) und Mischungen davon.

14. Verfahren nach einem der Ansprüche 12 und 13, wobei die chemische Oxidation in einem Flüssigkeitsbad durchgeführt wird, das mindestens das Material der Formel (III) und die oxidierende Verbindung enthält, unter Bedingungen, die zum Extrahieren des Elements Z aus dem Material der Formel (III) geeignet sind, um das erwartete Material der Formel (II) zu bilden.

15. Elektrodenmaterial, das durch das Verfahren nach einem der vorhergehenden Ansprüche erhalten wird.

**Claims**

1. Method for manufacturing a material of olivine crystallographic structure of formula (I):

$$A_aZ_zMmSiO_4$$

in which:

- A is chosen from lithium (Li), sodium (Na), potassium (K), and mixtures thereof,
- Z is chosen from beryllium (Be), magnesium (Mg), calcium (Ca), strontium (Sr), barium (Ba), and mixtures thereof,
- M is chosen from iron (Fe), nickel (Ni), cobalt (Co), manganese (Mn), chromium (Cr), and mixtures thereof,

- a, z and m are the stoichiometric coefficients, respectively, of A, Z and M, and which satisfy the following conditions:

- 

$$z > 0, m > 0, a > 0,$$

- 

$$a + z + m \leq 2,$$

and
- 

$$2 \leq (4 - a - 2z)/m < 4$$

said method comprising at least the steps consisting in:

**i.** having a material of olivine crystallographic structure of formula (II):

$$Z_z M_m SiO_4,$$

obtained by oxidation of a material of olivine crystallographic structure of formula (III):

$$Z_{z'} M_m SiO_4,$$

in which Z, M, z and m are as defined above and the stoichiometric index z' is such that z' > z, and
**ii.** electrochemically reducing said material of formula (II) in the presence of a source electrode made of element A under conditions that are suitable for forming the material of formula (I).

2. Method according to claim 1, in which a + z + m = 2.

3. Method according to either one of claims 1 and 2, in which z = 1 - a and/or m = 1.

4. Method according to any one of claims 1 to 3, in which z < 0.5, preferably z < 0.1, or even preferably z < 0.05, better still z < 0.01.

5. Method according to any one of the preceding claims, in which Z is magnesium and/or M is manganese and/or A is lithium.

6. Method according to any one of the preceding claims, **characterized in that** the material of formula (II) forms all or part of an electrode.

7. Method according to any one of the preceding claims, **characterized in that** the electrochemical reduction is performed using an electrolytic medium comprising a source of element A, preferably A being lithium and said electrolytic medium comprising a source of lithium, in particular in the form of a compound chosen from lithium hexafluorophosphate ($LiPF_6$), lithium perchlorate ($LiClO_4$), lithium arsenate ($LiAsO_4$), lithium tetrafluoroborate ($LiBF_4$), lithium bis(trifluoromethanesulfonimide) (LiTFSI), lithium bis(oxalato)borate (LiBOB), lithium bis(fluorosulfonyl)imide (LiFSI), lithium hexafluoroarsenate ($LiAsF_6$), lithium triflate ($LiSO_3CF_3$), lithium trifluoroacetate ($LiCF_3CO_2$), lithium hexafluoroantimonate ($LiSbF_6$), $LiN(CF_3SO_2)_3$, $LiN(C_2F_5SO_2)$, and mixtures thereof.

8. Method according to any one of the preceding claims, in which the material of formula (II) is, prior to its reduction, generated by electrochemical oxidation of the constituent element M of said material of formula (III), said material of formula (III) being preferably oxidized as working electrode opposite a counterelectrode.

9. Method according to claim 8, in which said material of formula (III) is used in the form of an electrode $Z_{z'}M_mSiO_4$, in which Z, M, z' and m are as defined in claims 1 to 4, and preferably $MgMnSiO_4$.

10. Method according to any one of claims 8 and 9, in which the oxidation of the material of formula (III) to the material of formula (II) and the reduction of the material of formula (II) to the material of formula (I) are performed in one and the same electrochemical cell and/or the oxidation of the material of formula (III) to the material of formula (II) and the reduction of the material of formula (II) to the material of formula (I) are performed at a single electrode of which said materials of formulae (III) and (II) are consecutively a component.

11. Method according to any one of claims 8 to 10, using at least one charging/discharging cycle, each cycle being preferably constituted by the succession of electrochemical oxidation and electrochemical reduction steps.

12. Method according to any one of claims 1 to 7, in which said material of formula (II) is generated beforehand by chemical oxidation of the material of formula (III).

13. Method according to claim 12, in which said chemical oxidation uses at least one oxidizing compound whose redox potential is greater than the redox potential of the $M^{2+}/M^{3+}$ couple and/or of the $M^{3+}/M^{4+}$ couple of the constituent element M of said material of formula (III), the oxidizing compound being preferably chosen from nitronium tetrafluoroborate ($NO_2BF_4$), potassium persulfate ($K_2S_2O_8$), nitrosonium hexafluorophosphate ($NO_2PF_6$), nitrosonium tetrafluoroborate ($NOBF_4$), hydrogen peroxide ($H_2O_2$), and mixtures thereof.

14. Method according to any one of claims 12 and 13, in which said chemical oxidation is performed in a liquid bath containing at least said material of formula (III) and said oxidizing compound under conditions suitable for extracting the element Z from said material of formula (III) to form said expected material of formula (II).

15. Electrode material obtained via the method according to any one of the preceding claims.

**Fig. 1**

**Fig. 2**

**Fig. 3**

**Fig. 4**

**Fig. 5**

**Fig. 6**

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6085015 A
- US 6514640 B1
- EP 1134826 A1
- US 20120227252 A1

**Littérature non-brevet citée dans la description**

- **SARCIBAR A et al.** New insights into electrochemical performance of Li2MnSiO4: effect on cationic substitutions. *J. MATER CHEM,* 02 Février 2015, vol. 3, 6004-6011
- **T. SSARKAR et al.** Mechanismm of charge transfer in olivine-type LiFeSiO4 and LiFe0.5M0.5SiO4(M=Mg, Al) cathode materials: First-principles. *J.PHYS.CHEM.C,* 16 Avril 2015, vol. 119, 9125-9133
- **M.E. ARROYO Y DE DOMPABLO et al.** Is it possible to prepare olivine-type LiFeSiO4 ? A joint computational an experimental investigation. *Solid State Ionics,* 2008, vol. 179, 1758-1762